## Europäisches Patentamt

## European Patent Office

## Office européen des brevets

(19)

(11) Veröffentlichungsnummer: **0 056 122**
**B1**

(12) # EUROPÄISCHE PATENTSCHRIFT

(45) Veröffentlichungstag der Patentschrift:
**31.07.85**

(51) Int. Cl.⁴: **C 08 G 18/42,** C 08 G 63/20

(21) Anmeldenummer: **81110345.6**

(22) Anmeldetag: **11.12.81**

(54) **Verfahren zur Herstellung von flexiblen Polyurethan-Weichschaumstoffen mit verbesserter Hydrolysebeständigkeit und guter Stanzbarkeit.**

(30) Priorität: **10.01.81 DE 3100523**

(43) Veröffentlichungstag der Anmeldung:
**21.07.82 Patentblatt 82/29**

(45) Bekanntmachung des Hinweises auf die Patenterteilung:
**31.07.85 Patentblatt 85/31**

(84) Benannte Vertragsstaaten:
**AT BE CH DE FR GB IT LI NL SE**

(56) Entgegenhaltungen:
**EP - A - 0 004 617**
**DE - A - 1 719 123**
**DE - A - 2 910 769**
**GB - A - 1 009 388**
**GB - A - 1 475 541**

(73) Patentinhaber: **BASF Aktiengesellschaft,
Carl-Bosch-Strasse 38, D-6700 Ludwigshafen (DE)**

(72) Erfinder: **Grabhoefer, Herbert, Dr., Londoner Ring 70,
D-6700 Ludwigshafen (DE)**
Erfinder: **Weyland, Peter, Dr., Ludwigshafener
Strasse 12A, D-6710 Frankenthal (DE)**

## Beschreibung

Die Erfindung betrifft ein Verfahren zur Herstellung von flexiblen Polyurethan-Weichschaumstoffen mit verbesserter Hydrolysebeständigkeit und Stanzbarkeit, wobei als Polyhydroxylverbindungen flüssige Polyester-polyole mit Hydroxylzahlen von 40 bis 80 und Molekulargewichten von 1500 bis 5000 verwendet werden, die hergestellt werden durch Polykondensation von organischen Dicarbonsäuren mit einer Polyolmischung A, die enthält Butandiol-1,4, Pentandiol-1,5, Hexandiol-1,6, mindestens ein Triol und gegebenenfalls Diethylenglykol oder einer Polyolmischung B, die enthält Butandiol-1,4, Hexandiol-1,6, Diethylenglykol und mindesten sein Triol.

Die Herstellung von Polyurethan-Weichschaumstoffen ist bekannt und wird in der einschlägigen Fachliteratur eingehend beschrieben. Verweisen möchten wir beispielsweise auf das Kunststoff-Handbuch, Band VII, »Polyurethane« von R. Vieweg und A. Höchtlen, Carl Hanser Verlag, München, 1966.

Zur Herstellung der Polyurethan-Weichschaumstoffe werden neben Katalysatoren, Treibmitteln sowie Hilfs- und Zusatzstoffen, als Polyisocyanate üblicherweise Toluylen-diisocyanate oder zur Verminderung der Toxizität und Erhöhung der Reaktivität Mischungen aus Toluylen-diisocyanaten und eines Gemisches aus Diphenylmethan-diisocyanaten und Polyphenyl-polymethylen-polyisocyanaten verwendet.

Als Polyhydroxylverbindungen in Betracht kommen vorzugsweise Polyether-polyole, insbesondere solche auf Basis von Ethylen- und/oder Propylenoxid. Nachteilig an den auf dieser Basis hergestellten Polyurethan-Weichschaumstoffen sind das allgemeine mechanische Eigenschaftsniveau, das nicht allen Anwendungsbereichen gerecht wird, und die Anfälligkeit gegen Licht- und Oxidationsmitteleinwirkung.

Sofern spezielle Anforderungen an das mechanische Eigenschaftsniveau von Polyurethan-Weichschaumstoffen für besondere Anwendungsbereiche gestellt werden, können zu deren Herstellung anstelle von Polyether-polyolen auch Polyester-polyole eingesetzt werden. Die erhaltenen Schaumstoffe besitzen jedoch nur eine geringe Hydrolysebeständigkeit.

Zur Verminderung dieser Nachteile wird in der DE-OS 28 15 540 vorgeschlagen, zur Herstellung von Polyurethan-Weichschaumstoffen bestimmte Ausgangskomponenten auszuwählen und als Polyisocyanate eine gegebenenfalls urethangruppenhaltige Mischung aus Diphenylmethan-diisocyanaten und Polyphenyl-polymethylen-polyisocyanaten mit einem Gehalt an Diphenylmethan-diisocyanat-Isomeren von 55 bis 85 Gew.-%, als Polyhydroxylverbindungen Polyesterpolyole oder Mischungen aus Polyester-polyolen und Polyether-polyolen mit einem Polyester-polyolgehalt von mindestens 60 Gew.-% und als Treibmittel Wasser oder Mischungen aus Wasser und niedrigsiedenden, gegebenenfalls halogenhaltigen Kohlenwasserstoffen zu verwenden. Besonders erwähnt werden Polyester-polyole mit einem Molekulargewicht von 750 bis 5000 und einer Funktionalität von 2 bis 3,5, die durch Polykondensation eines Dicarbonsäuregemisches aus Bernstein-, Glutar- und Adipinsäure in bestimmten Mengenverhältnissen und 2- und 3-wertigen Alkoholen hergestellt werden. Auf diese Weise können Polyurethan-Weichschaumstoffe mit einer hohen Trag- und Energieabsorptionsfähigkeit sowie einer beachtlichen Hydrolysenbeständigkeit erhalten werden.

Schwierig geformte Teile aus Polyurethan-Weichschaumstoff lassen sich am besten durch Stanzen der Formkörper aus Folien und Platten unter Verwendung speziell entwickelter Werkzeuge herstellen.

Es ist bekannt, daß sich Polyurethan-Weichschaumstoffe auf Polyester-polyolbasis mit niedrigen Raumgewichten sehr schwer stanzen lassen. Die Trennflächen kleben stellenweise oder vollkommen zusammen, so daß eine einwandfreie rationelle Fertigung komplizierter Formkörper fast unmöglich ist. Paraffinöl zur Verbesserung der Stanzbarkeit in geringen Mengen zuzusetzen ist schwer zu realisieren, da Paraffinöl und Polyester-polyole nicht mischbar sind und daher zu Störungen bei der Schaumstoffbildung führen.

Aufgabe der vorliegenden Erfindung war es, aus bei Verarbeitungstemperatur flüssigen und daher einfach handhabbaren Ausgangskomponenten Polyurethan-Weichschaumstoffe mit im Vergleich zu Schaumstoffen auf Polyether-polyol-Basis verbessertem mechanischem Eigenschaftsniveau, sehr guter Stanzbarkeit und hoher Hydrolysebeständigkeit herzustellen.

Diese Aufgabe konnte überraschenderweise durch die Verwendung von speziellen Polyester-polyolen auf Basis von Dicarbonsäuren und Mischungen aus Di- und Triolen in bestimmten Mengenverhältnissen bei der Herstellung der Polyurethan-Weichschaumstoffe gelöst werden.

Gegenstand der vorliegenden Erfindung ist somit ein Verfahren zur Herstellung von flexiblen Polyurethan-Weichschaumstoffen mit einer Dichte von 15 bis 70 g/Liter durch Umsetzen von organischen Polyisocyanaten, Polyhydroxylverbindungen und gegebenenfalls Kettenverlängerungsmitteln in Gegenwart von Katalysatoren, und gegebenenfalls niedrigsiedenden Flüssigkeiten als Treibmitteln sowie gegebenenfalls Hilfs- und Zusatzstoffen, das dadurch gekennzeichnet ist, daß man als Polyhydroxylverbindungen flüssige Polyester-polyole mit Hydroxylzahlen von 40 bis 80 und Molekulargewichten von 1500 bis 5000 verwendet, die hergestellt werden durch Polykondensation von organischen Dicarbonsäuren mit einer Polyolmischung A, die bezogen auf das Gesamtgewicht enthält:

5 bis 50 Gew.-% Butandiol-1,4,
20 bis 60 Gew.-% Pentandiol-1,5,
8 bis 35 Gew.-% Hexandiol-1,6,
2 bis 15 Gew.-% Triol und
0 bis 65 Gew.-% Diethylenglykol,

oder einer Polyolmischung B, die bezogen auf das Gesamtgewicht enthält:

10 bis 50 Gew.-% Butandiol-1,4,
15 bis 45 Gew.-% Hexandiol-1,6,
15 bis 65 Gew.-% Diethylenglykol und
2 bis 15 Gew.-% Triol.

Das erfindungsgemäße Verfahren weist den Vorteil auf, daß die Polyester-polyole bei der Verarbeitungstemperatur, d. h. bei Temperaturen von 20 bis 25° C, flüssig und daher gut verarbeitbar sind. Die aus den erfindungsgemäß verwendbaren Polyester-polyolen hergestellten Polyurethan-Weichschaumstoffe besitzen gute mechanische Eigenschaften, insbesondere eine hervorragende Stanzbarkeit bei gleichzeitig sehr guter Hydrolysenbeständigkeit.

Für die Herstellung der Polyurethan-Weichschaumstoffe nach dem erfindungsgemäßen Verfahren werden als Polyhydroxylverbindungen Polyester-polyole mit Hydroxylzahlen von 40 bis 80, vorzugsweise 45 bis 70 und Molekulargewichten von 1500 bis 5000, vorzugsweise 1700 bis 4000, verwendet. Die durchschnittliche Funktionalität der Polyester-polyole beträgt maximal 3,5, vorzugsweise 2,2 bis 3,0. Die Säurezahlen sind üblicherweise kleiner als 3, vorzugsweise liegen sie zwischen 0,5 und 2 KOH/g.

Geeignete Polyester-polyole werden beispielsweise aus organischen Dicarbonsäuren mit 2 bis 12 Kohlenstoffatomen, vorzugsweise aliphatischen Dicarbonsäuren mit 4 bis 6 Kohlenstoffatomen und den erfindungsgemäß verwendbaren Polyolmischungen A oder B hergestellt. Die auf diese Weise erhaltenen Polyester-polyole können einzeln oder in Form von Mischungen Anwendung finden.

Als organische Dicarbonsäuren kommen beispielsweise in Betracht: aliphatische, gegebenenfalls olefinisch ungesättigte Dicarbonsäuren, wie Bernstein-, Glutar-, Adipin-, Kork-, Azelain-, Sebacin-, Decandicarbon-, Malein- und Fumarsäure, sowie gegebenenfalls aromatische Dicarbonsäuren, wie Phthalsäure, Isophthalsäure und Terephthalsäure. Die organischen Dicarbonsäuren können dabei sowohl einzeln als auch im Gemisch untereinander verwendet werden. Bewährt haben sich beispielsweise Gemische aus 20 bis 35 Gew.-% Bernstein-, 35 bis 50 Gew.-% Glutar- und 20 bis 32 Gew.-% Adipinsäure, bezogen auf das Gesamtgewicht der genannte Dicarbonsäuren. Vorzugsweise verwendet wird jedoch Adipinsäure. Anstelle der freien Dicarbonsäuren können auch die entsprechenden Dicarbonsäurederivate, wie z. B. Dicarbonsäureester von Alkoholen mit 1 bis 4 Kohlenstoffatomen oder Dicarbonsäureanhydrid eingesetzt werden.

Als Polyolmischungen kommen im Sinne der Erfindung solche in Betracht, die bezogen auf das Gesamtgewicht der Polyolmischung enthalten:
Polyolmischung A:
5 bis 50 Gew.-%, vorzugsweise 9 bis 40 Gew.-% Butandiol-1,4,
20 bis 60 Gew.-%, vorzugsweise 22 bis 55 Gew.-% Pentandiol-1,5,
8 bis 35 Gew.-%, vorzugsweise 12 bis 30 Gew.-% Hexandiol-1,6,
2 bis 15 Gew.-%, vorzugsweise 2 bis 10 Gew.-% eines oder mehrerer Triole und
0 bis 65 Gew.-%, vorzugsweise 0 bis 50 Gew.-% Diethylenglykol und

Polyolmischung B:
10 bis 50 Gew.-%, vorzugsweise 17 bis 45 Gew.-% Butandiol-1,4,
15 bis 45 Gew.-%, vorzugsweise 24 bis 40 Gew.-% Hexandiol-1,6,
15 bis 65 Gew.-%, vorzugsweise 20 bis 50 Gew.-% Diethylenglykol und
2 bis 15 Gew.-%, vorzugsweise 2 bis 10 Gew.-% eines oder mehrerer Triole.

Als Triole haben sich Glycerin und Trimethylolpropan besonders bewährt, so daß diese, gegebenenfalls auch als Mischung, vorzugsweise verwendet werden.

Mischungen aus Butan-, Pentan- und Hexandiol können beispielsweise durch katalytische Hydrierung der obengenannten Mischung aus Bernstein-, Glutar- und Adipinsäure, z. B. entsprechend den Angaben der DE-OS 2 321 101, und anschließender Reinigung der Diolmischungen nach üblichen Methoden erhalten werden.

Die Herstellung der erfindungsgemäß zu verwendenden Polyester-polyole erfolgt nach an sich bekannten Verfahren durch Polykondensation von vorzugsweise einer Dicarbonsäure oder gegebenenfalls Dicarbonsäuremischung mit der Polyolmischung A oder B bei Temperaturen von 100 bis 250° C, vorzugsweise 130 bis 220° C, gegebenenfalls in Gegenwart von an sich bekannten Veresterungskatalysatoren, wie organischen Verbindungen von Titan, Vanadium oder Zinn und/oder Wasserschleppmitteln, wie Benzol, Toluol, Xylol oder Chlorbenzol zur azeotropen Destillation des Kondenswassers, bevorzugt unter vermindertem Druck in der Endphase der Polykondensation.

Gegebenenfalls kann es zweckmäßig sein, neben den erfindungsgemäß verwendbaren Polyester-polyolen zusätzlich Kettenverlängerungsmittel zur Herstellung der Polyurethan-Weichschaumstoffe mitzuverwenden. Als Kettenverlängerungsmittel kommen insbesondere difunktionelle Verbindungen mit Molekulargewichten von 18 bis kleiner als 450, vorzugsweise von 60 bis 300 in Betracht. Vorzugsweise verwendet werden aliphatische Diole mit 2 bis 6 Kohlenstoffatomen, wie z. B. Ethylen-, 1,4-Butylen- und 1,6-Hexamethylenglykol und aromatisch-aliphatische Diole, wie Di-($\beta$-hydroxethyl)-hydro-chinon. Das molare Verhältnis von Polyester-polyol zu Kettenverlängerungsmittel ist abhängig von den gewünschten mechanischen Eigenschaften des Polyurethan-Weichschaumstoffes und kann in breiten Grenzen variiert werden.

Zur Herstellung der Polyurethan-Weichschaumstoffe nach dem erfindungsgemäßen Verfahren eignen sich vorzugsweise aromatische Di- und Polyisocyanate. Im einzelnen seien beispielhaft genannt: Mischungen aus 2,4'- und 4,4'-Diphenylmethan-diisocyanat, Mischungen aus Diphenylmethan-diisocyanaten und Polyphenylpolymethylen-polyisocyanaten mit einem Gehalt an Diphenylmethan-diisocyanat-Isomeren von 55 bis 85 Gew.-%, vorzugsweise 60 bis 80 Gew.-%, bezogen auf das Gesamtgewicht der Mischung, 2,4- und 2,6-Toluylendiisocyanat sowie die entsprechenden handelsüblichen Isomerenmischungen und Mischungen aus Toluylendiisocyanaten und Gemischen aus Diphenylmethan-diisocyanaten und Polyphenyl-polymethylen-polyisocyanaten mit Diphenylmethan-diisocyanat-Gehalten von 30 bis 80 Gew.-%, vorzugsweise 40 bis 60 Gew.-%, bezogen auf das Gesamtgewicht des Gemisches (handelsübliches Roh-MDI).

Häufig werden auch sogenannte modifizierte mehrwertige Isocyanate, d. h. Produkte die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 10 92 007, Allophanatgruppen aufweisende Polyisocyanate, wie sie z. B. in der britischen Patentschrift 994 890, den ausgelegten Unterlagen des belgischen Patents 761 626 und der NL-OS 7 102 524 beschrieben werden, Isocyanuratgruppen aufweisende Polyisocyanate wie sie z. B. in den DE-PS 1 022 789, 1 222 067 und 1 027 394 sowie den DE-OS 1 929 034 und 2 004 048 beschrieben werden, Urethangruppen aufweisende Polyisocyanate, wie sie z. B. in den ausgelegten Unterlagen des belgischen Patents 752 261 oder der US-PS 3 394 164 beschrieben wer-den, acylierte Harnstoffgruppen aufweisende Polyisocyanate, z. B. gemäß DE-PS 1 230 778, Biuretgruppen aufweisende Polyisocyanate z. B. gemäß DE-PS 1 101 394 und GB-PS 8 89 050; durch Telomerisationsreaktionen hergestellte Polyisocyanate, z. B. entsprechend den ausgelegten Unterlagen des belgischen Patents 723 640, Estergruppen aufweisende Polyisocyanate, wie sie z. B. in der GB-PS 965 474 und 1 072 956, der US-PS 3 567 765 und der DE-PS 1 231 688 genannt werden.

Vorzugsweise kommen jedoch zur Anwendung: urethangruppenhaltige Polyisocyanate, beispielsweise mit niedermolekularen Diolen, Triolen oder Polypropylenglykolen, modifizierte 2,4'- und 4,4'-Di-phenylmethan-diisocyanat-Mischungen oder Toluylen-diisocyanat, Carbodiimidgruppen und/oder Isocyanuratringe enthaltende Polyisocyanate, z. B. auf Diphenylmethan-diisocyanat und/oder Toluylendiisocyanat-Basis und insbesondere 2,4- und 2,6-Toluylen-diisocyanat sowie die entsprechenden handelsüblichen Isomerenmischungen, z. B. im Gewichtsverhältnis 80 : 20, und Mischungen aus Toluylen-diisocyanaten und Roh-MDI.

Das Treibmittel, das beim erfindungsgemäßen Verfahren verwendet wird, ist Wasser, das mit Isocyanatgruppen unter Bildung von Kohlendioxid reagiert. Die Wassermengen, die zweckmäßigerweise eingesetzt werden, betragen 0,01 bis 5 Gew.-%, vorzugsweise 0,1 bis 2 Gew.-%, bezogen auf das Polyester-polyolgewicht.

Andere verwendbare Treibmittel, die gegebenenfalls zusätzlich mitverwendet werden, sind niedrigsiedende Flüssigkeiten; die unter dem Einfluß der exothermen Polyadditionsreaktion verdampfen. Geeignet sind Flüssigkeiten, welche gegenüber den organischen Polyisocyanaten inert sind und Siedepunkte von nicht über 100°C bei Atmosphärendruck, vorzugsweise zwischen −40 und +50°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung der Polyurethan-Weichschaumstoffe hängt ab von der Dichte, die man erreichen will, sowie von der verwendeten Wassermenge. Im allgemeinen liefern Mengen von 0,5 bis 30 Gew.-%, vorzugsweise 5 bis 20 Gew.-%, bezogen auf das Gewicht des Polyester-polyols, zufriedenstellende Ergebnisse.

Dem schaumfähigen Reaktionsgemisch können ferner Katalysatoren, die die Polyurethanbildung beschleunigen, und gegebenenfalls Hilfs- und Zusatzstoffe, wie sie üblicherweise zur Herstellung von Polyurethan-Weichschaumstoffen Anwendung finden, einverleibt werden. In Betracht kommen beispielsweise oberflächenaktive Stoffe, Flammschutzmittel, Porenregler, Antioxidationsmittel, Hydrolyseschutzmittel, Farbstoffe, Füllstoffe und andere Zusätze.

Geeignete Katalysatoren zur Beschleunigung der Umsetzung zwischen den Polyester-polyolen, gegebenenfalls Kettenverlängerungsmitteln, Wasser und den organischen Polyisocyanaten sind beispielsweise tertiäre Amine, wie Dimethylbenzylamin, N,N,N',N'-Tetramethyl-diamino-ethylether, Bis-(dimethylaminopropyl)-harnstoff, N-Methyl- bzw. N-Ethylmorpholin, Dimethylpiperazin, 1,2-Dimethylimidazol, 1-Aza-bicyclo-(3,3,0)-octan und vorzugsweise Triethylendiamin, Metallsalze, wie Zinn-dioctoat, Bleioctoat, Zinndiethylhexoat und vorzugsweise Zinn(II)-salze und Dibutylzinndilaurat sowie insbesondere Mischungen aus tertiären Aminen und organischen Zinnsalzen. Vorzugsweise verwendet werden 0,5 bis 5 Gew.-% Katalysator auf Basis tertiärer Amine und/oder 0,05 bis 2,5 Gew.-% Metallsalze, bezogen auf das Polyester-polyolgewicht.

In Betracht kommen ferner beispielsweise oberflächenaktive Substanzen, welche zur Unterstützung der Homogenisierung der Ausgangsstoffe dienen und gegebenenfalls auch geeignet sind, die Zellstruktur der Polyurethan-Weichschaumstoffe zu regulieren. Genannt seien beispielhaft Siloxan-Oxalkylen-Mischpolymerisate und andere Organopolysiloxane, oxethylierte Alkylphenyle, oxethylierte Fettalkohole, Paraffinöle, Ricinusöl- bzw. Ricinolsäureester und Türkischrotöl, die in Mengen von 0,2 bis 6 Gewichtsteilen pro 100 Gewichtsteilen Polyester-polyol angewandt werden.

Zur Verbesserung der Flammbeständigkeit können den erfindungsgemäß hergestellten Polyurethan-Weichschaumstoffen Flammschutzmittel einverleibt werden. Genannt seien beispielsweise Phosphor- und/oder Halogenatome enthaltende Verbindungen, wie Trikresylphosphat, Tris-2-chlorethylphosphat, Tris-chlorpropylphosphat und Tris-2,3-dibrompropylphosphat, anorganische Flammschutzmittel, wie Antimontrioxid, Arsenoxid, Ammoniumphosphat, Ammoniumsulfat u. a. sowie Cyansäurederivate, wie Cyanamid, Dicyandiamid, Guanidin, Guanidinsalze, Biguanid und Melamin. Im allgemeinen hat es sich als vorteilhaft erwiesen, 5 bis 50 Gewichtsteile der genannten Flammschutzmittel für jeweils 100 Gew.-Teile der Polyester-polyole zu verwenden.

Nähere Angaben über die obengenannten anderen üblichen Hilfs- und Zusatzstoffe sind der Fachliteratur, beispielsweise der Monographie von J. H. Saunders und K. C. Frisch »High Polymers«, Band XVI, Polyurethanes, Teil 1 und 2, Verlag Interscience Publishers 1962 bzw. 1964 zu entnehmen.

Zur Herstellung der Polyurethan-Weichschaumstoffe werden die organischen Polyisocyanate und Polyester-polyole bzw. Mischungen aus Polyester-polyolen und Kettenverlängerungsmittel in solchen Mengen zur Umsetzung gebracht, daß das Verhältnis von NCO- : OH-Gruppen 1 : 0,8 bis 1,2, vorzugsweise ungefähr 1 : 0,9 bis 1,1 ist.

Die Polyurethan-Weichschaumstoffe werden nach dem Prepolymer- und vorzugsweise nach dem one shot-Verfahren hergestellt. Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Mischung aus Polyester-polyolen, Katalysatoren, Treibmitteln, Hilfs- und Zusatzstoffen zu der Komponente A zu vereinigen und als Komponente B die organischen Polyisocyanate zu verwenden. Vorteilhaft ist hierbei beispielsweise, daß die Komponenten A und B getrennt gelagert und raumsparend transportiert werden können.

Zur Herstellung der Polyurethan-Weichschaumstoffe werden die beschriebenen Ausgangsstoffe in den genannten Mengenverhältnissen intensiv bei Temperaturen von 15 bis 60°C, vorzugsweise 20 bis 35°C, gemischt und danach die Reaktionsmischung in offenen oder geschlossenen, gegebenenfalls temperierten Formen aufschäumen gelassen.

Die erhaltenen Polyurethan-Weichschaumstoffe besitzen Raumgewichte von ungefähr 15 bis 70 g/Liter. Die Produkte weisen eine verbesserte Hydrolysebeständigkeit und sehr gute Stanzbarkeit auf, wobei Stanzteile von 0,5 cm Dicke und 10 cm Länge keine Verklebungen an den Rändern zeigen.

Die erfindungsgemäß hergestellten flexiblen Polyurethan-Weichschaumstoffe auf Polyester-polyolbasis finden vielseitig Verwendung, z. B. auf dem Bausektor für Klebe-, Dichtungs- und Fugenbänder, als Isoliermaterial für Wärmespeicher und Heizungsrohre, als Filtermaterial in der Lüftungs- und Klimatechnik, als Dämmaterial zur Schallabsorption; in der Automobilindustrie als Dämmaterial für Dichtungen und Zwischenlagen, in der Phono- und Elektroindustrie in Form von Stanzteilen, als Staubfilter in Atemmasken, als Verpackungsmaterial für zerbrechliche Güter, für die Herstellung von elastischem Verbandsmaterial und im Haushaltssektor in Form von Schwämmen und Schwammtüchern.

Die in den Beispielen genannten Teile beziehen sich auf das Gewicht.


Herstellung der Polyester-polyole

Beispiel 1

73,1 Gew.-Teile Adipinsäure, 54,8 Gew.-Teile einer Diolmischung aus 21 Gew.-% Butandiol-1,4, 52 Gew.-% Pentandiol-1,5 und 27 Gew.-% Hexandiol-1,6 und 2,95 Gew.-Teile Trimethylolpropan werden bei Normaldruck unter Abdestillieren des Kondensationswassers bei Temperaturen bis 210°C verestert. Danach wird die Veresterung nach einer Druckerniedrigung bis ca. 40 mbar zu Ende geführt. Nach Abtrennung von 18,7 Gew.-Teilen Destillat erhält man ein bei Raumtemperatur flüssiges Polyester-polyol mit folgenden Kennzahlen:

| OH-Zahl: | 49,7 mg KOH/g |
|---|---|
| Säurezahl: | 1 mg KOH/g |
| Viskosität (75° C): | 1800 mPa s |
| Jodfarbzahl: | 2 |

Die Polyolmischung enthielt, bezogen auf das Gesamtgewicht, 20 Gew.-% Butandiol-1,4; 49,4 Gew.-% Pentandiol-1,5; 25,6 Gew.-% Hexandiol-1,6 und 5,1 Gew.-% Trimethylolpropan.

## Beispiel 2

78 Gew.-Teile Adipinsäure, 58 Gew.-Teile einer Diolmischung aus 22 Gew.-% Butandiol-1,4, 50 Gew.-% Pentandiol-1,5 und 28 Gew.-% Hexandiol-1,6 und 4,4 Gew.-Teile Trimethylolpropan werden analog den Angaben von Beispiel 1 verestert. Nach Abdestillieren von 19,3 Gew.-Teilen Destillat erhält man ein bei Raumtemperatur flüssiges Polyester-polyol mit folgender Kennzahlen:

| OH-Zahl: | 63 mg KOH/g |
|---|---|
| Säurezahl: | 0,7 mg KOH/g |
| Viskosität | |
| (75° C): | 1060 mPa s |
| (25° C): | 13 040 mPa s |
| Jodfarbzahl: | 1—2 |

Die Polyolmischung enthielt, bezogen auf das Gesamtgewicht, 20,5 Gew.-% Butandiol-1,4; 46,5 Gew.-% Pentandiol-1,5; 26 Gew.-% Hexandiol-1,6 und 7,1 Gew.-% Trimethylolpropan.

## Beispiel 3

Gemäß Beispiel 1 werden 64,5 Gew.-Teile Adipinsäure, 24 Gew.-Teile einer Diolmischung aus 22 Gew.-% Butandiol-1,4, 50 Gew.-% Pentandiol-1,5 und 28 Gew.-% Hexandiol-1,6, 24,5 Gew.-Teile Diethylenglykol und 3,6 Gew.-Teile Trimethylolpropan verestert. Nach Abdestillieren von 16 Gew.-Teilen Destillat erhält man ein bei Raumtemperatur flüssiges Polyester-polyol mit folgenden Kennzahlen:

| OH-Zahl: | 61 mg KOH/g |
|---|---|
| Säurezahl: | 0,7 mg KOH/g |
| Viskosität | |
| (75° C): | 1120 mPa s |
| (25° C): | 15 800 mPa s |
| Jodfarbzahl: | 1—2 |

Die Polyolmischung enthielt, bezogen auf das Gesamtgewicht, 10,2 Gew.-% Butandiol-1,4, 23 Gew.-% Pentandiol-1,5, 12,9 Gew.-% Hexandiol-1,6, 47,0 Gew.-% Diethylenglykol und 6,9 Gew.-% Trimethylolpropan.

## Beispiel 4

2619 Gew.-Teile Adipinsäure, 1963 Gew.-Teile einer Diolmischung aus 22 Gew.-% Butandiol-1,4, 50 Gew.-% Pentandiol-1,5 und 28 Gew.-% Hexandiol-1,6 und 103 Gew.-Teile Glycerin werden analog den Angaben von Beispiel 1 verestert. Nach Abdestillieren von 680 Gew.-Teilen Destillat erhält man ein bei Raumtemperatur flüssiges Polyester-polyol mit folgenden Kenndaten:

| OH-Zahl: | 59 mg KOH/g |
|---|---|
| Säurezahl: | 1,1 mg KOH/g |
| Viskosität | |
| (75° C): | 1450 mPa s |
| (25° C): | 18 400 mPa s |
| Jodfarbzahl: | 1 |

Die Polyolmischung enthielt, bezogen auf das Gesamtgewicht, 20,9 Gew.-% Butandiol-1,4, 47,5 Gew.-% Pentandiol-1,5, 26,6 Gew.-% Hexandiol-1,6 und 5 Gew.-% Glycerin.

Beispiel 5

64,5 Gew.-Teile Adipinsäure, 10,2 Gew.-Teile Butandiol-1,4, 13,4 Gew.-Teile Hexandiol-1,6, 24,8 Gew.-Teile Diethylenglykol und 3,6 Gew.-Teile Trimethylolpropan werden analog den Angaben von Beispiel 1 verestert. Nach Abdestillieren von 16,3 Gew.-Teilen Destillat erhält man ein bei Raumtemperatur flüssiges Polyester-polyol mit folgenden Kennzahlen:

| | |
|---|---|
| OH-Zahl: | 62,6 mg KOH/g |
| Säurezahl: | 0,8 mg KOH/g |
| Viskosität | |
| (75°C): | 1098 mPa s |
| (25°C): | 15 400 mPa s |
| Jodfarbzahl: | 1—2 |

Die Polyolmischung enthielt, bezogen auf das Gesamtgewicht, 19,9 Gew.-% Butandiol-1,4, 26,1 Gew.-% Hexandiol-1,6, 447,1 Gew.-% Diethylenglykol und 7,0 Gew.-% Trimethylolpropan.


Herstellung von Polyurethan-Weichschaumstoffen

Beispiele 6 bis 8 und Vergleichsbeispiel

Allgemeine Herstellungsvorschrift

Zur Herstellung von Weichschaumstoffen mit einer Rohdichte von ungefähr 30 g/Liter werden

| | |
|---|---|
| 100 Gew.-Teile | Polyester-polyol, |
| 3,4 Gew.-Teile | Wasser, |
| 1,2 Gew.-Teile | N,N-Dimethylbenzylamin, |
| 1,2 Gew.-Teile | Schaumstabilisator auf Polyetherpolysiloxanbasis (®Niax L 532 der Union Carbide Corp.) und |
| 40 Gew.-Teile | einer Mischung aus 2,4- und 2,6-Toluylendiisocyanat im Gewichtsverhältnis 80 : 20 (Kennzahl 95) |

intensiv bei Raumtemperatur gemischt und in einer offenen Form aufschäumen gelassen. Die verwendeten Polyester-polyole und die gemessenen mechanischen Eigenschaften der erhaltenen Weichschaumstoffe sind in der folgenden Tabelle zusammengefaßt.

Der Stauchhärteabfall nach DIN 53 578, ermittelt nach einer Feuchtigkeitsalterung von 120 Stunden bei 85°C und 100% relativer Feuchtigkeit, zeigt, daß die Hydrolysebeständigkeit der Weichschaumstoffe durch Verwendung der speziellen Polyester-polyole erheblich verbessert wurde. Ferner werden durch Stanzen einwandreie Formteile erhalten, die keinerlei Verklebungen aufweisen.

| Polyester-polyole; mechanische Eigenschaften | Vergleichs-beispiel | Beispiele 6 | 7 | 8 |
|---|---|---|---|---|
| Polyester-polyole hergestellt aus bzw. gemäß | Adipinsäure Diethylenglykol Trimethylol-propan (OHZ.60) | Beispiel 2 | Beispiel 4 | Beispiel 5 |
| Dichte nach DIN 53 420 [kg/m$^3$] | 30 | 31 | 32 | 29 |
| Zugfestigkeit nach DIN 53 571 [kPa] | 165 | 164 | 169 | 150 |
| Bruchdehnung nach DIN 53 571 [%] | 198 | 172 | 188 | 195 |
| Stauchhärte nach DIN 53 577 bei 40% Kompression [kPa] | 4,9 | 4,7 | 4,8 | 4,3 |
| Stauchhärteabfall nach DIN 53 578 nach Feuchtigkeitsalterung (120 Stunden, 85° C, 100% relative Luftfeuchtigkeit) [%] | 39 | 9,3 | 10 | 14 |
| Stanzbarkeit | schlecht, teilweise Verklebung | einwandfreie Stanzteile   keine Verklebungen | | |

## Patentansprüche

1. Verfahren zur Herstellung von flexiblen Polyurethan-Weichschaumstoffen mit einer Dichte von 15 bis 70 g/Liter durch Umsetzung von organischen Polyisocyanaten, Polyhydroxylverbindungen und gegebenenfalls Kettenverlängerungsmitteln in Gegenwart von Katalysatoren, Wasser und gegebenenfalls niedrigsiedenden Flüssigkeiten als Treibmitteln sowie gegebenenfalls Hilfs- und Zusatzstoffen, dadurch gekennzeichnet, daß man als Polyhydroxylverbindungen flüssige Polyesterpolyole mit Hydroxylzahlen von 40 bis 80 und Molekulargewichten von 1500 bis 5000 verwendet, die hergestellt werden durch Polykondensation von organischen Dicarbonsäuren mit einer Polyolmischung A, die bezogen auf das Gesamtgewicht enthält:

5 bis 50 Gew.-% Butandiol-1,4,
20 bis 60 Gew.-% Pentandiol-1,5,
8 bis 35 Gew.-% Hexandiol-1,6,
2 bis 15 Gew.-% Triol und
0 bis 65 Gew.-% Diethylenglykol,

oder einer Polyolmischung B, die bezogen auf das Gesamtgewicht enthält:

10 bis 50 Gew.-% Butandiol-1,4,
15 bis 45 Gew.-% Hexandiol-1,6,
15 bis 65 Gew.-% Diethylenglykol und
2 bis 15 Gew.-% Triol.

2. Verfahren nach Anspruch 1, dadurch gekennzeichnet, daß als Triole Trimethylolpropan und/oder Glycerin verwendet werden.

3. Verfahren nach Anspruch 1, dadurch gekennzeichnet, daß als organische Dicarbonsäure Adipinsäure verwendet wird.

**0 056 122**

## Claims

1. A process for the preparation of resilient and flexible polyurethane foams having a density of from 15 to 70 g/liter by reacting organic polyisocyanates, polyhydroxyl compounds, optional chain extenders and optional auxiliaries and additives, in the presence of catalysts and of water and optional low-boiling liquids as blowing agents, wherein liquid polyester polyols having hydroxyl numbers of 40 to 80 and molecular weights of 1500 to 5000 are used as polyhydroxyl compounds, said polyols being produced by the polycondensation of organic dicarboxylic acids with a polyol mixture A which contains, based on the total weight,

5 to 50 percent by weight of 1,4-butanediol,
20 to 60 percent by weight of 1,5-pentanediol,
8 to 35 percent by weight of 1,6-hexanediol,
2 to 15 percent by weight of triol and
0 to 65 percent by weight of diethylene glycol,

or with a polyol mixture B which contains, based on the total weight,

10 to 50 percent by weight of 1,4-butanediol,
15 to 45 percent by weight of 1,6-hexanediol,
15 to 65 percent by weight of diethylene glycol and
2 to 15 percent by weight of triol.

2. A process as claimed in claim 1, wherein trimethylolpropane and/or are used as the triols.
3. A process as claimed in claim 1, wherein adipic acid is used as the organic dicarboxylic acid.

## Revendications

1. Procédé de préparation de matières alvéolaires de polyuréthanne souples et flexibles, d'une densié de 15 à 7 g/litre, par réaction de polyisocyanates organiques, de composés polyhydroxylés et éventuellement d'agents d'allongement de chaîne, en présence de catalyseurs, d'eau et éventuellement de liquides à bas point d'ébullition comme gonflants, et éventuellement d'auxiliaires et additifs, caractérisé par le fait qu'on utilise, comme composés polyhydroxylés, des polyesters-polyols liquides d'indice d'hydroxyle de 40 à 80 et de poids moléculaires de 1500 à 5000, qui sont préparés par polycondensation d'acides dicarboxyliques organiques avec un mélange de polyols A, qui contient, par rapport au poids total:

5 à 50% en poids de butandiol-1,4,
20 à 60% en poids de pentandiol-1,5,
8 à 35% en poids d'hexandiol-1,6,
2 à 15% en poids de triol et
0 à 65% en poids de diéthylènglycol

ou un mélange de polyols B, qui contient, par rapport au poids total:

10 à 50% en poids de butandiol-1,4,
15 à 45% en poids d'hexandiol-1,6,
15 à 65% en poids de diéthylènglycol et
2 à 15% en poids de triol.

2. Procédé selon la revendication 1, caractérisé par le fait que l'on utilise, comme triols, du triméthylolpropane et/ou glycérine.
3. Procédé selon la revendication 1, caractérisé par le fait que l'on utilise, comme acide dicarboxylique, de l'acide adipique.

9